# EUROPEAN PATENT APPLICATION

(11) **EP 4 198 488 A1**
(43) Date of publication of application: **21.06.2023**
(21) Application number: 21215915.6
(22) Date of filing: 20.12.2021
(51) Int. Cl.: G01N 3/04, G01N 19/04

(54) **FIXTURES FOR PREPARING CROSS-BONDED SPECIMENS**

(71) Applicant: Bostik SA, 92700 Colombes (FR)
(72) Inventor: MA, Yunfei, Shanghai, 201108 (CN); SUN, Meng, Shanghai, 201108 (CN)
(74) Representative: Arkema Patent

(57) **Abstract**

A fixture for preparing a cross-bonded specimen for cross bonding strength measurement of adhesives is provided. The fixture comprises a base; a fixed supporting member connected to the base; a first positioning member connected to the base; a pair of vertically adjustable supporting members placed at two sides of the fixed supporting member; a second positioning member connected to the base; and a weight block having a flat bottom. The fixture is simple and easy-to-operate.

## Description

### FIELD OF THE INVENTION

The present invention relates to the field of cross bonding tensile strength measurements of adhesives. More specifically, the present invention relates to fixtures for preparing cross-bonded specimens for cross bonding tensile strength measurement use.

### BACKGROUND

Interfacial bonding strength, or cross bonding tensile strength is an important mechanical property of adhesives and it needs an accurate measurement. Usually the measurement method for the cross bonding tensile strength of an adhesive includes (1) preparing a cross-bonded specimen by joining two substrates in the form of bars using the adhesive to be measured, wherein an adhesive layer is formed between the two substrates; and (2) fixing one substrate, pulling the other substrate along a direction perpendicular to the plane of the cross, and measuring the tensile force required to separate the two substrates; and (3) calculating the cross bonding tensile strength, i.e., the recorded maximum tensile force divided by the area of the adhesive layer.

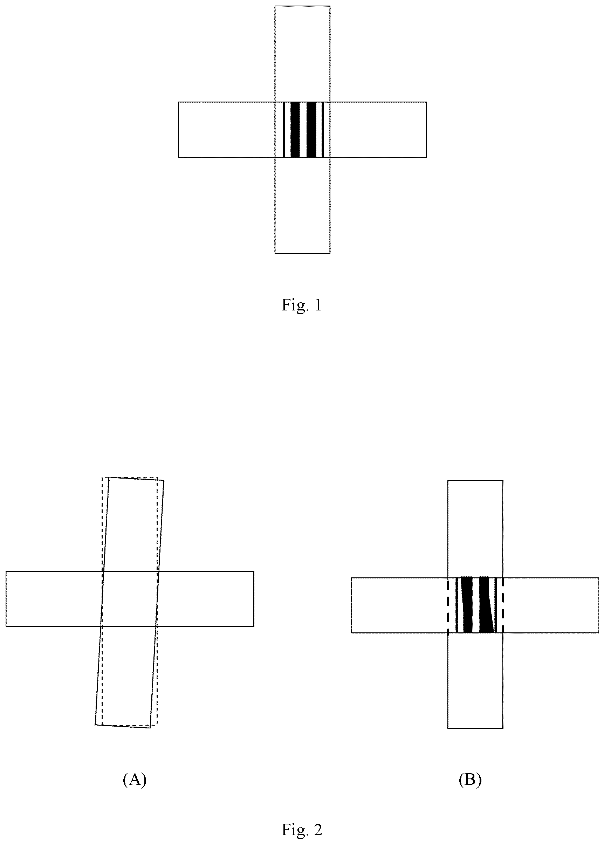

A common procedure to prepare a cross-bonded specimen includes the following steps. Firstly, provide two substrates having the same size of, for example, 100 mm^{∗}25 mm^{∗}2mm. Secondly, dispense two adhesive beads on the middle position of one substrate; and place spacers (e.g., steel wires) at both sides of the adhesive beads to control the thickness of the adhesive layer to be formed. For example, the thickness of the adhesive layer can be controlled at 0.05mm, 0.1mm, or 0.12mm. Next, mount the other substrate on the first one to form a centrosymmetric cross shape. At last, apply a pressing force on the overlap of the two substrates for a determined time period. Then the adhesive beads will form an adhesive layer with controlled thickness and the two substrates are bonded together. Thus the cross-bonded specimen is prepared and is ready for tensile strength test. Fig. 1 shows a schematic diagram of a standard cross-bonded specimen. The black areas are the adhesive layer.

The test of cross bonding tensile strength requires standard and high quality cross-bonded specimens to ensure the accuracy of the test results. However, it is not easy to prepare a perfect cross-bonded specimen, which is in the form of a centrosymmetric cross, in particular a right angle cross, having a uniform adhesive layer. For example, when mounting the second substrate, it is hard to control the cross angle, in particular when the cross angle is a right angle, and bonding areas of the two substrates. As shown in Fig. 2(A), the dotted lines are where the second substrate needs to be placed at a right angle over the first substrate. However, the second substrate is a little displaced. Even when the second substrate is placed in the right place, it may be moved by handshaking or other external force right after joining the two substrates. After a pressing force is applied, it is desired to form a rectangular adhesive layer with a specific width. However, it is easily destroyed by a small motion or an unbalanced pressing force, especially for adhesives with less initial adhesive strength. As shown in Fig. 2(B), the irregular shape of the adhesive layer is not desired. These defects of the prepared cross-bonded specimens may cause inaccurate or unacceptable test results. Usually an experienced operator is preferred to prepare the cross-bonded specimens.

It is therefore desired to have a simple, efficient, and easy-to-operate fixture which can be used to prepare high quality cross-bonded specimens, so as to improve the accuracy of the cross bonding tensile strength testing of adhesives.

### SUMMARY OF THE INVENTION

The present invention provides a fixture for preparing a cross-bonded specimen with a first substrate and a second substrate. The fixture comprises a base; a fixed supporting member connected to the base, configured to receive the first substrate; a first positioning member connected to the base, configured to position the first substrate along a first horizontal direction; a pair of vertically adjustable supporting members having the same height, connected to the base and placed at two sides of the fixed supporting member, configured to receive the second substrate; a second positioning member connected to the base, configured to position the second substrate along a second horizontal direction which is perpendicular to the first horizontal direction; and a weight block having a flat bottom, configured to vertically press an overlap of the first substrate and the second substrate to form the cross-bonded specimen; wherein the first substrate and the second substrate have a vertical distance when placed on the fixed supporting member and the pair of vertically adjustable supporting members respectively before the weight block is pressed down.

The fixture of the present application may further comprise a third positioning member which is connected to the base and configured to position the weight block along a vertical direction when pressing down. As the weight block is pressed downward along a vertical direction constrained by the third positioning member, the overlap of the first substrate and the second substrate can be bonded evenly. Uneven bonding because of handshaking is eliminated.

The present invention provides a simple, efficient, an easy-to-operate fixture for preparing a cross-bonded specimen. The fixture has a first positioning member and a second positioning member for positioning horizontal directions of the first substrate and the second substrate respectively, so the prepared cross-boned specimens can have a same cross-angle. The consistency of the prepared cross-boned specimens is improved and the experimental variation is reduced. With the fixture of the present invention, the efficiency for preparing a cross-bonded specimen is increased. Even an operator with less experience can prepare a high quality cross-bonded specimen, which means the prepared cross-bonded specimen is a centrosymmetric cross having a uniform adhesive layer. With these standard cross-bonded specimens, the accuracy and reliability of cross bonding tensile strength tests are improved.

Further areas of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a perspective view of a standard cross-bonded specimen for cross bonding tensile strength test.
Fig. 2(A) and Fig. 2(B) are perspective views of two cross-bonded specimen with defects.
Fig. 3 is a perspective exploded view of a fixture for preparing a cross-bonded specimen according to an embodiment of the present application.
Fig. 4 is a top view of the base 12 of the fixture shown in Fig. 3.
Fig. 5 is a perspective view of the fixture shown in Fig. 3 with two substrates placed on forming a right angle.
Fig. 6 is a perspective view of the fixture shown in Fig. 3 with two substrates placed on forming a right angle and a weight block pressed thereon.

### DETAILED DESCRIPTION

The following description of the preferred embodiment(s) is merely exemplary in nature and is in no way intended to limit the invention, its application, or uses.

As used in the present application, the term "connected to" or "connected with" is used to describe two components which are physically connected, for example, the two components can be formed integrally which means they are formed as a whole, or, the two components are operably coupled with each other through at least one fastening or coupling component, such as screws, clamps, adhesives, etc.

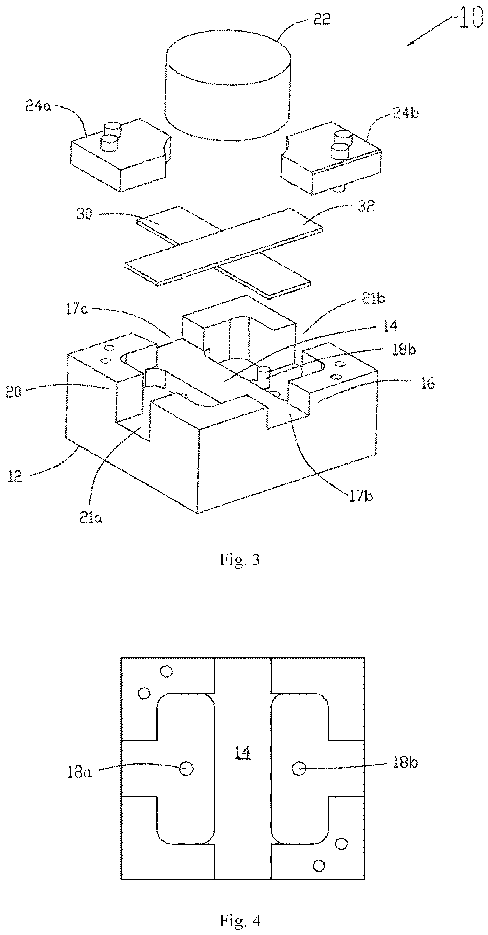

Referring to Fig. 3 generally, in accordance with the present invention, there is provided a fixture 10. The fixture 10 can be used to prepare a cross-bonded specimen with a first substrate 30, a second substrate 32, and an adhesive 40 (not shown). The prepared cross-bonded specimen can be used to measure the cross bonding tensile strength of the adhesive 40. Any kind of adhesive may be used here as an adhesive sample. The adhesive 40 may be for electronics or general assembly applications.

In the present invention, each of the first substrate 30 and the second substrate 32 may be a rectangular bar. Preferably the first substrate 30 and the second substrate 32 have the same size, so that they can form a centrosymmetric cross specimen, more preferably the first substrate 30 and the second substrate 32 form a right angle cross specimen. In some embodiments of the present application, each of the first substrate 30 and the second substrate 32 may be a rectangular bar having a size of 100mm^{∗}25mm^{∗}2mm. Each of the first substrate 30 and the second substrate 32 may be made of any materials, such as metal, plastic, or composite material. The first substrate 30 and the second substrate 32 may be made of the same material or different materials, depending on the testing requirements.

As shown in Fig. 3 and Fig. 4, the fixture 10 comprises a base 12, a fixed supporting member 14, a first positioning member 16, a pair of vertically adjustable supporting members 18a (not shown on Fig.3, please refer to Fig. 4), 18b, a second positioning member 20, a weight block 22, and a third positioning member 24a and 24b.

The base 12 is a support block. It has a flat bottom in a shape of square as shown in Fig. 3 and Fig. 4. Any other suitable shape of the bottom of the base 12 is also within the scope of the present invention. The base 12 can be made of any suitable material, such as metal, plastic, or composite material, preferably, steel.

The fixed supporting member 14 is connected to the base 12, configured to receive the first substrate 30. The base 12 and the fixed supporting member 14 could not move in relation to one another. The fixed supporting member 14 can be formed with the base 12 integrally. In such situation, the fixed supporting member 14 and the base 12 may be made of the same material. In some other embodiments of the present application, the fixed supporting member 14 may be installed or mounted on the base 12 by at least one fastening or coupling component. In this case, the fixed supporting member 14 and the base 12 may be made of different materials. In an example, the base 12 is made of stainless steel and the fixed supporting member 14 is made of an insulated plastic material. As shown in Fig. 3, the fixed supporting member 14 is a horizontal flat platform protruding from the base 12. When the first substrate 30 is placed on the fixed supporting member 14, the first substrate 30 is placed horizontally.

The first positioning member 16 is connected to the base, configured to position the first substrate 30 along a first horizontal direction. The first positioning member 16 is used to limit or constrain the first substrate 30 in a specific position. With the first positioning member 16, the first substrate 30 could not move after it is placed on the fixed supporting member 14. The first positioning member 16 may comprise at least one component protruding from the base 12. As shown in Fig. 3, the first positioning member 16 is a frame upward protruding from the base 12.

In some other embodiments of the present application, the fixed supporting member 14 and the first positioning member 16 may be in a form of a groove on the base 12 (not shown). The groove may have a same size with the size of the first substrate 30, so that the first substrate 30 can be embedded in the groove.

The fixture 10 comprises a pair of vertically adjustable supporting members 18a, 18b having the same height, connected to the base 12 and placed at two sides of the fixed supporting member 14, configured to receive the second substrate 32. The vertically adjustable supporting members 18a, 18b are used to provide a support for the second substrate 32. The upper ends of the vertically adjustable supporting members 18a, 18b are higher than the fixed supporting member 14, so that when the second substrate 32 is placed on the vertically adjustable supporting members 18a, 18b, the second substrate 32 is placed horizontally over the first substrate 30 and keeps a vertical distance with the first substrate 30. In the procedures of preparing a cross-bonded specimen, the adhesive 40 is applied on the first substrate 30 before placing the second substrate 32, so the vertical distance shall be long enough to avoid the second substrate 32 contacting the adhesive 40. Each of the vertically adjustable supporting member 18a, 18b may comprise a spring screw. The spring screw has an end (e.g., a threaded end) for connecting with the base 12 and a flexible end having a spring inside. When a force is applied on the flexible end along a longitudinal direction of the spring screw, the spring screw can become shorten.

The second positioning member 20 is connected to the base 12, configured to position the second substrate 32 along a second horizontal direction which is perpendicular to the first horizontal direction of the first substrate 30. The second positioning member 20 is used to limit or constrain the second substrate 32 in a specific position. With the second positioning member 20, the second substrate 32 could not move horizontally after it is placed on the vertically adjustable supporting members 18a, 18b.

The first positioning member 16 and the second positioning member 20 may have a similar structure. In some embodiments of the present application, either the first positioning member or the second positioning member comprises at least one bar protruding from the base. In some other embodiments, the first positioning member 16 and the second positioning member 20 are formed by a frame protruding from the base 12 having at least one first notch for positioning the first substrate 30 and at least one second notch for positioning the second substrate 32. As shown in Fig. 3, the first positioning member 16 and the second positioning member 20 are formed by a frame protruding from the base 12 having two first notches 17a, 17b for positioning the first substrate 30 and two second notches 21a, 21b for positioning the second substrate 32.

In some embodiments of the present application, at least one of the fixed supporting member 14, the first positioning member 16 and the second positioning member 20 is integrally formed with the base 12.

The fixture 10 of the present application further comprise a weight block 22 for joining the first substrate 30 and the second substrate 32. The weight block 22 has a flat bottom, configured to vertically press on the overlap of the first substrate 30 and the second substrate 32 to form the cross-bonded specimen. As shown in Fig. 3, the weight block 22 is in a shape of cylinder. The weight block 22 may also be in other shapes, such as cube, cone. As shown in Fig. 3, the weight block 22 is separated from the base 12. In some other embodiments, the weight block 22 can also be connected to the base 12. When it is intended that the weight block 22 is connected to the base 12, the weight block 22 may be placed in a first place far from the base 12 when placing the first substrate 30 and the second substrate 32, and the weight block 22 can be moved to a second place for forming a downward pressing force. The weight block 22 can be made of any suitable material, such as metal, plastic or composite material, preferably, high density material. The weight block 22 can be selected based on its weight considering the load needed for preparing the specimen. The downward pressing force formed by the gravity of the weight block 22 is not only used to bond the two substrates together, but also is used to overcome the elasticity of the vertically adjustable supporting members 18a, 18b.

In some embodiments of the present application, the fixture 10 may further comprise a third positioning member. The third positioning member may be connected to the base, configured to position the weight block 22 along a vertical direction when pressing down. The third positioning member is used to control that the weight block 22 is placed on the overlap of the first substrate 30 and the second substrate 32 and form a balanced pressing force. As shown in Fig. 3, the third positioning member comprises a pair of positioning components 24a, 24b connected to the base 12 (or connected to the first positioning member and/or the second positioning member) through some fastening components (e.g., screws). The two positioning components 24a, 24b have an arc profile fitting the cylinder shape of the weight block 22. In some embodiments, the third positioning member may be formed with the base 12 integrally. But preferably the third positioning member has a detachable connection with the base 12. In certain embodiments, the third positioning member can be installed or mounted at different positions of the base 12, so as to accommodate the weight blocks of different sizes. In certain other embodiments, a specific third positioning member can be selected based on the size and shape of the weight block 22.

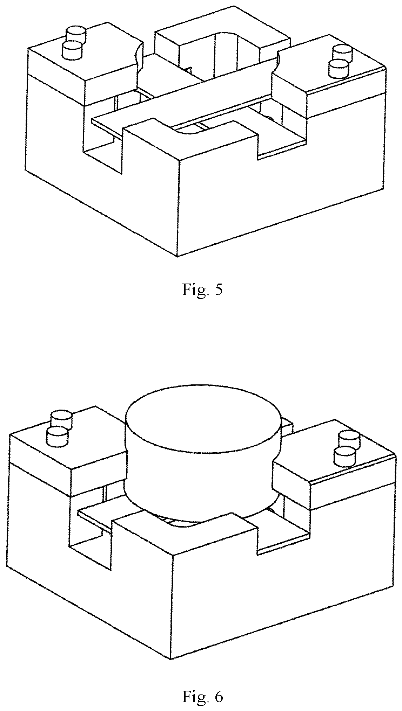

The method for preparing a cross-bonded specimen using the fixture 10 of the present application may comprise the following sequential steps.
(1) Placing the first substrate 30 on the fixed supporting member 14. As the first positioning member 16 can position the first substrate 30, the first substrate 30 could not move on the fixed supporting member 14.
(2) Applying at least one adhesive bead on the first substrate 30.
(3) Placing two spacers on the first substrate 30 at both sides of the adhesive beads. The spacer used herein can be iron wire or steel wire having a diameter that equals to the thickness of the adhesive layer to be formed. For example, the thickness of the adhesive layer can be controlled at 0.05mm, 0.1mm, and 0.12mm. As the spacer is rigid, when weight block 22 presses down in the following step (5), the spacer can control the thickness of the adhesive layer.
(4) Placing the second substrate 32 on the pair of vertically adjustable supporting members 18a, 18b, as shown in Fig. 5. As the second positioning member 20 can position the second substrate 32, the second substrate 32 can be placed in a specific position horizontally, preferably perpendicular to the direction of the first substrate 30. As the second substrate 32 is light weighted, when it is placed on the vertically adjustable supporting members 18a, 18b, the vertically adjustable supporting members 18a, 18b are only pressed down slightly. The second substrate 32 keeps a vertical distance with the first substrate 30.
(5) Putting the weight block 22 on the overlap of the first substrate 30 and the second substrate 32 for a predetermined time period, as shown in Fig. 6. The third positioning member 24a and 24b can limit the vertical movement of the weight block 22 to make sure it can apply a balanced pressure on the overlap of the two substrates.
(6) Optionally a curing condition may be applied to the specimen for curing the adhesive. For example, the fixture 10 can be placed in an oven at a predetermined temperature for a certain time period.
(7) Removing the weight block 22 and taking out the specimen. The thus prepared cross-bonded specimen can be used for measuring cross bonding tensile strength of the adhesive.

The order of the above steps may be adjusted. For example, it does not make any difference by changing the order of applying adhesive beads and placing spacers on the first substrate 30. In addition, the above step (1) can be conducted after step (2) or step (3).

When the fixture of present application is used to prepare cross bond specimens, the variation of the cross bonding tensile strength measurements decreased significantly.

## Claims

1. A fixture for preparing a cross-bonded specimen with a first substrate and a second substrate, comprising:
a base;
a fixed supporting member connected to the base, configured to receive the first substrate;
a first positioning member connected to the base, configured to position the first substrate along a first horizontal direction;
a pair of vertically adjustable supporting members having the same height, connected to the base and placed at two sides of the fixed supporting member, configured to receive the second substrate;
a second positioning member connected to the base, configured to position the second substrate along a second horizontal direction which is perpendicular to the first horizontal direction; and
a weight block having a flat bottom, configured to vertically press an overlap of the first substrate and the second substrate to form the cross-bonded specimen,
wherein the first substrate and the second substrate have a vertical distance when placed on the fixed supporting member and the pair of vertically adjustable supporting members respectively before the weight block is pressed down.

2. The fixture according to claim 1 further comprising a third positioning member connected to the base, configured to position the weight block along a vertical direction when pressing down.

3. The fixture according to either of claims 1 and 2, wherein each of the first substrate and the second substrate is a rectangular bar.

4. The fixture according to anyone of claims 1 to 3, wherein the fixed supporting member is a platform protruding from the base.

5. The fixture according to anyone of claims 1 to 4, wherein the vertically adjustable supporting member comprises a spring screw.

6. The fixture according to anyone of claims 1 to 5, wherein either of the first positioning member and the second positioning member comprises at least one bar protruding from the base.

7. The fixture according to anyone of claims 1 to 5, wherein the first positioning member and the second positioning member are formed by a frame protruding from the base having at least one first notch for positioning the first substrate and at least one second notch for positioning the second substrate.

8. The fixture according to anyone of claims 1 to 7, wherein at least one of the fixed supporting member, the first positioning member and the second positioning member is integrally formed with the base.

9. The fixture according to anyone of claims 2 to 8, wherein the third positioning member comprises a pair of positioning components connected to the base.
